# EUROPÄISCHE PATENTANMELDUNG

(11) **EP 1 767 300 A1**
(43) Veröffentlichungstag der Anmeldung: **28.03.2007**
(21) Anmeldenummer: 06014312.0
(22) Anmeldetag: 11.07.2006
(51) Int. Cl.: B23H 7/26, B23Q 16/08

(54) **Spannvorrichtung mit einem Spannhalter zum positionsgenauen Festspannen einer Palette oder eines Werkstücks**

(30) Priorität: 21.09.2005 CH 15372005
(71) Anmelder: F-Tool International AG, 5040 Schoeftland (CH)
(72) Erfinder: Troxler, Ferdinand, 6214 Schenkon (CH)
(74) Vertreter: Kohler Schmid Möbus

(57) **Zusammenfassung**

Die Spannvorrichtung besteht aus einem Spannhalter (1) und einer lösbar daran festspannbaren Palette (2). Der Spannhalter (1) ist mit ersten Zentrierelementen (20, 21) versehen ist, welche mit an der Palette (2) korrespondierend angeordneten weiteren Zentrierelementen (33, 34) derart zusammenwirken, dass die Palette (2) oder das Werkstück (2a) beim Festspannen lagegerecht positioniert wird. Der Spannhalter (1) weist zudem zwei Spannelemente (4, 5) zum Fixieren der Palette (2) am Spannhalter (2) auf. Jedes Spannelement (4, 5) ist mit einer schrägen Druckfläche (8, 9) versehen, welche die Palette (2) beim Festspannen am Spannhalter (1) in der X-Y-Ebene gegen die ersten Zentrierelemente (20, 21) des Spannhalters (1) drücken und in Z-Richtung am Spannhalter (1) fixieren.

## Beschreibung

Die vorliegende Erfindung bezieht sich auf eine gemäss dem Oberbegriff des Anspruchs 1 ausgebildete Spannvorrichtung.

Spannvorrichtungen der hier zur Rede stehenden Art dienen dem positionsdefinierten Aufspannen von Paletten, Werkstücken, Werkzeugen und dergleichen im Arbeitsbereich einer Bearbeitungsmaschine. Soll ein Werkzeug oder Werkstück an dem Spannhalter festgespannt werden, so wird dieses üblicherweise zuerst an einer Palette fixiert, welch letztere anschliessend am Spannhalter festgespannt wird. Der Spannhalter selber ist in den meisten Fällen fest mit der Arbeitsmaschine verbunden. Die Betätigung der Spannelemente des Spannhalters erfolgt üblicherweise manuell, elektromechanisch, pneumatisch oder hydraulisch.

Bei bekannten Spannvorrichtungen ist der Spannhalter üblicherweise mit vier Zentrierzapfen versehen, welche je zwei konisch verlaufende Seitenflächen aufweisen. Das Gegenstück, beispielsweise in Form einer Palette, ist mit vier Nuten versehen, welche in der Lage und Form mit den Zentrierzapfen korrespondieren. Die Palette ist mit einem mittig angeordneten Spannzapfen versehen, mittels welchem sie an einem Spannmechanismus des Spannhalters fixierbar ist. Beim Festspannen der Palette am Spannhalter dringen die Zentrierzapfen in die Nuten ein und richten die Palette gegenüber dem Spannhalter in X- und Y-Richtung sowie bezüglich der Winkellage um die Z-Achse aus.

Aus der DE-C-42 13 770 ist eine Vorrichtung zum Positionieren eines Werkzeugs oder Werkstücks an einer Werkzeugmaschine bekannt. Die Vorrichtung besteht aus einem an der Werkzeugmaschine zu befestigenden Halter, sowie einem Träger zur Aufnahme des Werkzeugs oder Werkstücks. Zum Positionieren des Trägers gegenüber dem Halter ist der Träger mit zwei Zylinderstiften versehen, während der Halter zwei Referenzflächen aufweist. Die eine Referenzfläche ist V-förmig ausgebildet, während die andere Referenzfläche eine gerade verlaufende Seitenfläche aufweist. Zwischen dem jeweiligen Zylinderstift und der jeweiligen Referenzfläche soll es zu einer Linienberührung kommen. Um den Träger mit seinen Zylinderstiften in der X-Y-Ebene gegen den Halter bzw. die beiden Referenzanschläge zu drücken, ist eine mittels einer Feder belastete Spannbacke vorgesehen. Schliesslich sind drei separate Schrauben vorgesehen, mittels welchen der Träger in Z-Richtung am Halter fixiert wird.

Aus der EP 0 255 042 ist eine gattungsgemässe Spannvorrichtung zum Fixieren eines Werkzeugs an einer Werkzeugmaschine bekannt. Die Spannvorrichtung besteht im wesentlichen aus einem Spannhalter und einem mit einem Zugbolzen versehenen Elektrodenhalter. In die Oberseite des Elektrodenhalters sind vier Nuten eingelassen, welche um jeweils 90° um die Z-Achse zueinander versetzt sind. In jede Flanke jeder Nut ist ein Einschnitt zur Bildung einer in Z-Richtung elastisch nachgiebigen Lippe eingeschnitten. Von der Oberseite des Spannhalters stehen vier Leisten vor, welche in Lage und Form mit den Nuten des Elektrodenhalters korrespondieren. In den Ecken des Spannhalters sind vier als Z-Referenz dienende Pfosten angeordnet. Beim Festspannen des Elektrodenhalters am Spannhalter legen sich die Leisten des Werkzeughalters an den elastisch nachgiebigen Lippen an und biegen diese in Z-Richtung axial einwärts, bis die als Z-Referenz dienenden Pfosten an Stützflächen des Spannhalters zur Anlage kommen, so dass die Z-Lage des Elektrodenhalters gegenüber dem Spannhalter bestimmt ist. Durch die sich an den Lippen anlegenden Leisten wird der Elektrodenhalter gegenüber dem Spannhalter beim Festspannen in X- und Y-Richtung sowie bezüglich der Winkellage um die Z-Achse positioniert. Um den Elektrodenhalter vom Spannhalter abnehmen zu können, muss dieser um zumindest die Länge des über den Elektrodenhalter vorstehenden Zugbolzens abgehoben werden.

Die Erfindung zielt darauf ab, eine Spannvorrichtung mit einem Spannhalter zum positionsgenauen Festspannen einer Palette oder eines Werkstücks derart weiterzubilden, dass sie einfach aufgebaut ist und kostengünstig hergestellt werden kann und ausserdem einfach in der Handhabung ist.

Hierzu wird nach der Erfindung eine Spannvorrichtung gemäss dem Anspruch 1 bereitgestellt.

Indem das jeweilige Spannelement des Spannhalters mit einer abgeschrägten Druckfläche versehen ist und die Palette bzw. das Werkstück korrespondierende Spannflächen aufweist, so dass die Palette bzw. das Werkstück beim Fixieren am Spannhalter in der X-Y-Ebene gegen dessen Zentrierelemente gedrückt und gleichzeitig in Z-Richtung gegen den Spannhalter gezogen wird, kann auf separate Fixierelemente verzichtet werden, da das bzw. die Spannelement(e) neben dem Zentrieren der Palette bzw. des Werkstücks in der X-Y-Ebene gleichzeitig auch ein Positionieren und Fixieren der Palette bzw. des Werkstücks am Spannhalter in der Z-Richtung bewirken.

Bevorzugte Ausführungsformen und Weiterbildungen des Erfindungsgegenstandes sind in den abhängigen Ansprüchen 2-8 umschrieben.

Im folgenden wird ein Ausführungsbeispiel der erfindungsgemässen Spannvorrichtung unter Bezugnahme auf die beiliegenden Zeichnungen näher erläutert. In den Zeichnungen zeigt:
- Fig. 1: eine perspektivische Ansicht des Spannhalters in teilweiser Explosionsansicht zusammen mit einer Palette;
- Fig. 2: eine Draufsicht auf die am Spannhalter festgespannte Palette;
- Fig. 3: einen Querschnitt durch der Spannhalter und die Palette entlang der Linie A-A in Fig.2;
- Fig. 4: eine perspektivische Ansicht des Spannhalters zusammen mit einem daran festspannbaren Werkstück.

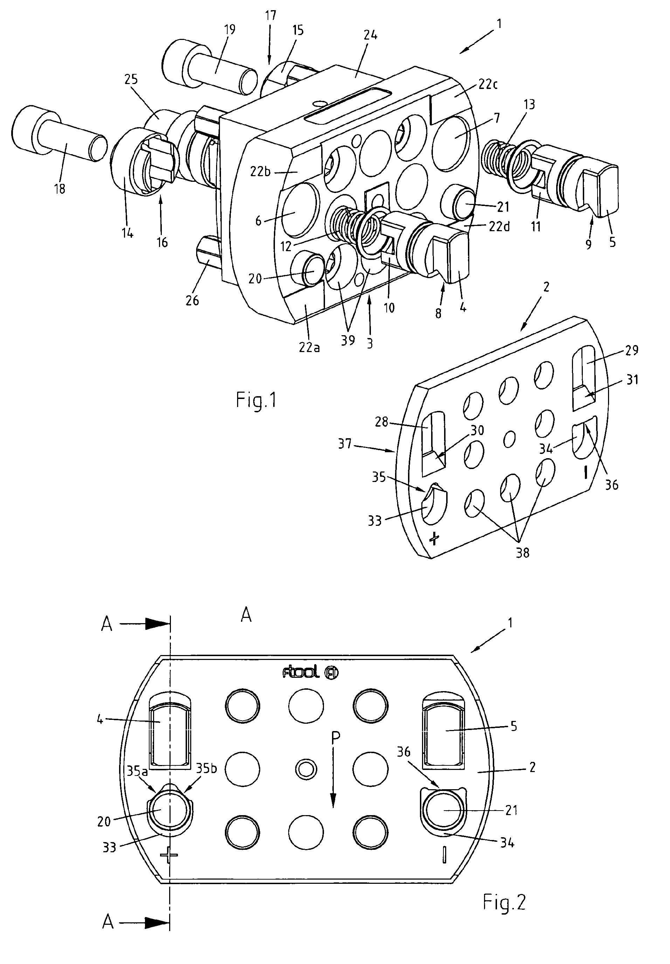

Die Fig. 1 zeigt eine perspektivische Ansicht der Spannvorrichtung bestehend aus einem Spannhalter 1 sowie einer Palette 2, wobei der Spannhalter 1 in teilweiser Explosionsansicht dargestellt ist. Der dem Festspannen der Palette 2 dienende Spannhalter 1 weist auf der der Palette 2 zuzuwendenden Kupplungsseite zwei Spannelemente in Form von Einzugsbolzen 4, 5 auf, welche in Durchgangsbohrungen 6, 7 im Spannhalter 1 aufgenommen werden. Der jeweilige Einzugsbolzen 4, 5 ist mit einer schräg verlaufenden Druckfläche 8, 9 versehen, welche an einer korrespondierenden Spannfläche an der Palette 2 anzugreifen bestimmt ist, wie nachfolgend noch näher erläutert wird. Unter jedem Einzugsbolzen 4, 5 wird eine Druckfeder 12, 13 angeordnet, welche den jeweiligen Einzugsbolzen 4, 5 nach oben in die Ruhestellung zu drücken bestimmt ist. Die Einzugsbolzen 4, 5 sind auf der der Druckfläche 8, 9 abgewandten Rückseite mit Orientierungsflächen 10, 11 in Form von seitlichen Abflachungen versehen, mittels welche sie verdrehsicher in Aufnahmen 14, 15 geführt werden. Die Aufnahmen 14, 15 sind dazu mit einem Schlitz 16 versehen, dessen Breite auf die mit den genannten Orientierungsflächen 10, 11 versehene Rückseite des jeweiligen Einzugsbolzens 4, 5 abgestimmt ist. In die Rückseite des jeweiligen Einzugsbolzens 4, 5 ist je ein Innengewinde eingelassen, an dem eine Inbusschraube 18, 19 angreift, mittels welcher der jeweilige Einzugsbolzen 4, 5 nach unten in die Wirkstellung gezogen werden kann. Von der Kupplungsfläche 3 des Spannhalters 1 stehen erste Zentrierelemente in Form von Zentrierstiften 20, 21 vor. Zudem ist der Spannhalter 1 in jeder Ecke mit einer leicht erhabenen Auflagefläche 22a, 22b, 22c, 22d versehen, welche die Z-Auflage beim Festspannen der Palette 2 bildet. Auf der Rückseite des Spannhalters 1 ist eine Adapterplatte 24 angeordnet, welche mit nicht näher dargestellten Zentrierelementen, einem Spannzapfen 25 sowie Stützfüssen 26 versehen ist. Diese Adapterplatte 24 dient dem Befestigen des Spannhalters 1 an einem maschinenseitig angeordneten Spannsystem (nicht dargestellt). Die gezeigte Adapterplatte kann ggf. auch weggelassen werden, indem der Spannhalter direkt an einer Unterlage wie beispielsweise einem Maschinentisch befestigt wird.

Die mit einer planen Unterseite versehene Palette 2 weist zwei länglichen Fixieröffnungen 28, 29 auf, deren eine Seitenfläche jeweils in Form der bereits erwähnten Spannfläche 30, 31 ausgebildet ist, an welcher der jeweilige Einzugsbolzen 4, 5 mit seiner Druckfläche 8, 9 anzugreifen bestimmt ist. Die Palette 2 ist zudem mit weiteren Zentrierelementen in Form von zwei Zentrieröffnungen 33, 34 versehen, deren Lage, Grösse und Ausbildung auf den jeweiligen Zentrierstift 20, 21 des Spannhalters 1 abgestimmt ist. Die mit "+" bezeichnete erste Zentrieröffnung 33 dient dem Zentrieren der Palette 2 in X- und Y-Richtung, während die mit "-" bezeichnete zweite Zentrieröffnung 34 dem Zentrieren der Palette 2 bezüglich der Winkellage um die Z-Achse dient. Die erste Zentrieröffnung 33 ist auf der der benachbarten Fixieröffnung 28 zugewandten Seite 35 V-förmig zulaufend ausgebildet, während die zweite Zentrieröffnung 34 auf der der Fixieröffnung 29 zugewandten Seite eine gerade verlaufende Seitenfläche 36 aufweist. Die beiden Zentrieröffnungen 33, 34 liegen in etwa auf der Längsmittelachse der benachbarten Fixieröffnung 28, 29, wobei die Längsmittelachse der einen Fixieröffnung 28 parallel zur Längsmittelachse der anderen Fixieröffnung 29 verläuft. Die Palette 2 ist zudem mit einer Vielzahl von Befestigungsbohrungen 38 versehen, die dem Fixieren eines Werkstücks oder mehrerer Werkstücke dient. Der Spannhalter 1 seinerseits ist mit Freistellungen in Form von Vertiefungen 39 versehen, welche die Aufnahme von Befestigungsmitteln wie beispielsweise Schraubenköpfen ermöglichen, mittels welchen Werkzeuge oder Werkstücke an den Befestigungsbohrungen 38 der Palette 2 fixiert werden können.

Der Durchmesser der beiden Zentrieröffnungen 33, 34 sowie der Abstand zwischen den beiden Zentrieröffnungen 33, 34 ist so gewählt, dass die Palette 2 nach dem losen Aufsetzen auf der Spannhalter 1 in der X-Y-Ebene verschoben werden kann. Damit die Palette 2 auf der Spannhalter 1 aufgesetzt werden kann, müssen sich die beiden Einzugsbolzen 4, 5 in der oberen Ruhestellung befinden, was durch Lösen der beiden Inbusschrauben 18, 19 bewerkstelligt wird. In der oberen Ruhestellung liegt die obere Kante der Druckfläche 8, 9 des jeweiligen Einzugsbolzens 4, 5 soweit oberhalb der Oberseite des jeweiligen Zentrierstifts 20, 21 dass die Palette seitlich aufgeschoben bzw. weggeschwenkt werden kann. In der oberen Ruhestellung der Spannzapfen kann die Palette 2 von oben auf den Spannhalter 1 aufgesetzt werden, so dass die beiden Einzugsbolzen 4, 5 durch die jeweilige Fixieröffnungen 28, 29 hindurchgreifen. Die Palette 2 kann dann seitlich soweit verschoben werden kann, bis die beiden Zentrieröffnungen 33, 34 über den beiden Zentrierstiften 20, 21 zu liegen kommen. Danach kann die Palette 2 nach unten gegen der Spannhalter 1 gedrückt werden, so dass der jeweilige Zentrierstift 20, 21 in die zugehörige Zentrieröffnung 33, 34 eindringt. Wie bereits vorgängig erwähnt, kann die Palette 2 in dem lose aufgesetzten Zustand in der X-Y-Ebene verschoben werden, so dass eine Zentrierung der Palette 2 gegenüber dem Spannhalter 1 erfolgt. Vorzugsweise sind die Zentrieröffnungen 33, 34 in der Palette 2 derart auf die Zentrierstifte 20, 21 des Spannhalters 1 abgestimmt, dass ein geringes Spiel zwischen den genannten Zentrierelementen 20, 21; 33, 34 vorhanden ist, so dass die Palette 2 im lose aufgesetzten Zustand gegenüber dem Spannhalter 1 in der X-Y-Ebene verschoben werden kann. Beim Festziehen der beiden Einzugsbolzen 4, 5 legt sich deren Druckfläche 8, 9 an der Spannfläche 30, 31 der jeweiligen Fixieröffnung 28, 29 an und zieht die Palette 2 in Z-Richtung nach unten gegen der Spannhalter 1. Andererseits bewirkt die Schrägstellung der Spannflächen 30, 31 bzw. der Druckflächen 8, 9, dass die Palette 2 in der X-Y-Ebene verschoben und gegen die beiden Zentrierstifte 20, 21 gedrückt wird. Dabei legt sich der eine Zentrierstift 20 an den beiden V-förmig zulaufenden Seitenflächen der ersten Zentrieröffnung 33 an, und richtet damit die Palette 2 in X- und Y-Richtung aus, während sich der zweite Zentrierstift 21 auf der der benachbarten Fixieröffnung 29 zugewandten Seite an der Seitenfläche 36 der zweiten Zentrieröffnung 34 anlegt, so dass er die Winkellage der Palette 2 um die Z-Achse festlegt. Beim seitlichen Verschieben der Palette 2 liegt diese mit ihrer planen Unterseite 37 vorzugsweise bereits auf den Auflageflächen 22a, 22b, 22c, 22d des Spannhalters 1 auf. Anstelle der gezeigten manuellen Verschiebung der beiden Einzugsbolzen 4, 5 mittels der Inbusschrauben 18, 19 könnte auch eine pneumatische, elektromagnetische oder hydraulische Betätigung der Einzugsbolzen 4, 5 vorgesehen werden.

Fig. 2 zeigt eine Draufsicht auf die am Spannhalter 1 festgespannte Palette 2. Durch die abgeschrägten Druckflächen der beiden Einzugsbolzen 4, 5, welche jeweils an einer korrespondierenden Spannfläche an der Palette 2 angreifen, wird die Palette 2 beim Festspannen einerseits in Z-Richtung nach unten gegen der Spannhalter 1 gezogen und andererseits in Pfeilrichtung P gegen die beiden Zentrierstift 20, 21 gedrückt. Dabei legt sich der eine Zentrierstift 20 an den beiden Seitenwänden 35a, 35b der V-förmig zulaufenden Zentrieröffnung 33 an und positioniert damit die Palette 2 gegenüber dem Spannhalter 1 in X- und in Y-Richtung. Der andere Zentrierstift 21 legt sich an der geraden Seitenfläche 36 der zweiten Öffnung 34 an, womit die Lage der Palette 2 auch bezüglich der Winkellage um die Z-Achse festgelegt ist. Beim Festspannen kommt die Palette 2 mit ihrer planen Unterseite auf den vier Auflageflächen 22a, 22b, 22c, 22d (Fig. 1) des Spannhalters 1 zur Anlage, womit auch die Z-Lage der Palette 2 gegenüber dem Spannhalter 1 bestimmt ist. Die absolute wie auch die Repetitionsgenauigkeit, mit welcher die Palette am Spannhalter festgespannt werden kann, liegt im Bereich von wenigen tausendstel Millimetern.

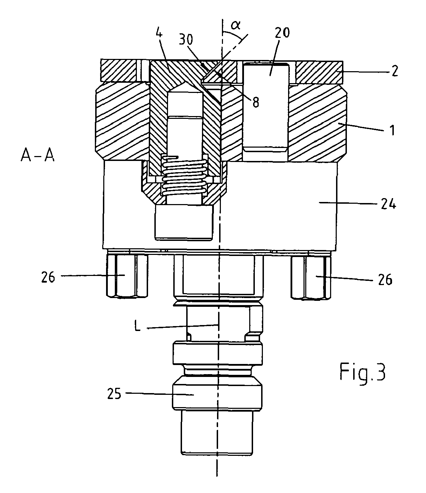

Die Fig. 3 zeigt einen Querschnitt durch der Spannhalter 1 und die Palette 2 entlang der Linie A-A in Fig. 2. Aus dieser Darstellung ist insbesondere ersichtlich, wie die abgeschrägte Druckfläche 8 des Einzugsbolzens 4 an der korrespondierenden Spannfläche 30 der Palette 2 angreift. Die abgeschrägte Druckfläche 8 des Einzugsbolzens 4 schliesst mit der in Z-Richtung verlaufenden Längsachse des Spannhalters 1 einen Winkel (α) von ca. 45° ein. Je nach Gegebenheit und Anforderungen kann dieser Winkel zwischen 30°und 60° liegen. Daneben sind auch noch der Spannzapfen 25, zwei Stützfüsse 26 sowie der Zentrierstift 20 ersichtlich, welch letzterer mittels eines Presssitzes in dem Spannhalter 1 verankert ist.

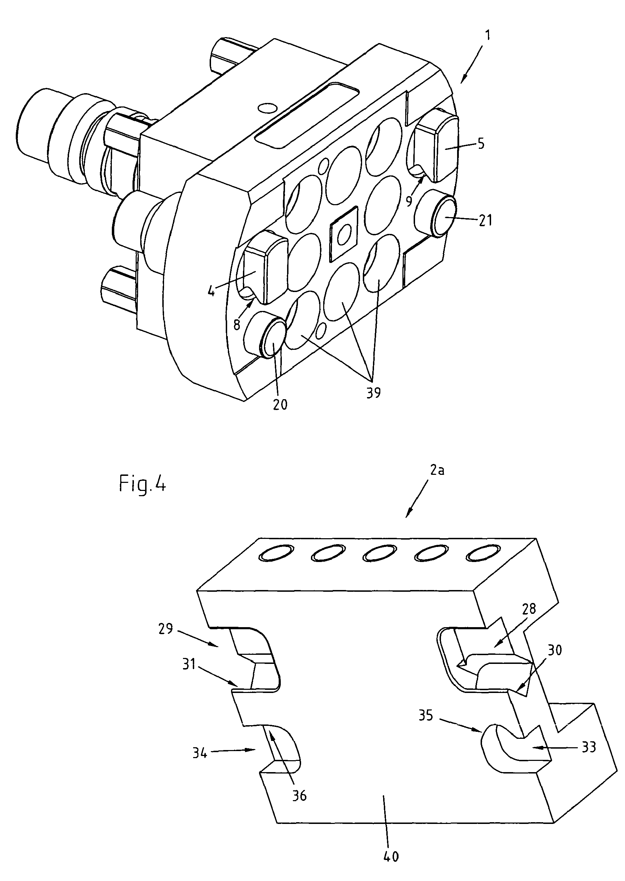

Fig. 4 zeigt eine perspektivische Ansicht des Spannhalters 1 zusammen mit einem daran festspannbaren Gegenstück 2a. Beim Gegenstück 2a kann es sich sowohl um ein Werkstück wie auch einen Adapter oder einen Halter handeln, wobei der Einfachheit halber nachfolgend jeweils von einem Werkstück 2a gesprochen wird. In diesem Beispiel kann auf die Verwendung einer Palette verzichtet werden, da die für die Fixierung sowie die exakte Positionierung des Werkstücks 2a gegenüber dem Spannhalter 1 wesentlichen Elemente direkt in die plane Unterseite 40 des Werkstücks 2a eingelassen sind. Die beiden Fixieröffnungen 28, 29 sind dabei derart gestaltet, dass der Kopf des jeweiligen Einzugsbolzens 4, 5 darin aufgenommen werden kann. Auf der der jeweiligen Zentrieröffnung 33, 34 zugewandten Seite ist die jeweilige Fixieröffnungen 28, 29 mit einer abgeschrägten Spannfläche 30, 31 versehen, an welcher der jeweilige Einzugsbolzen 4, 5 mit seiner abgeschrägten Druckfläche 8, 9 angreifen kann. Von den beiden Zentrieröffnungen 33, 34 ist die eine Zentrieröffnung 33 auf der der benachbarten Fixieröffnung 28 zugewandten Seite 35 wiederum V-förmig zulaufend ausgebildet, während die andere Fixieröffnung 34 auf der der benachbarten Fixieröffnung 29 zugewandten Seite eine gerade verlaufende Seitenfläche 36 aufweist.

Eine derartig ausgebildete Spannvorrichtung bietet eine hohe Zuverlässigkeit sowie eine hohe absolute wie auch repetierbare Genauigkeit. Zudem ist die Spannvorrichtung vergleichsweise einfach aufgebaut und kann kostengünstig gefertigt werden. Auch die Handhabung ist sehr einfach, da die Spannelemente -Einzugsbolzen 4, 5- neben dem Zentrieren der Palette bzw. des Werkstücks in der X-Y-Ebene gleichzeitig auch ein Positionieren und Fixieren der Palette bzw. des Werkstücks am Spannhalter in der Z-Richtung bewirken.

Schliesslich kann durch den Verzicht auf einen Spannzapfen die Palette flach gehalten werden. Ein weiterer grosser Vorteil liegt darin, dass die Palette oder das Werkstück lediglich mit vier Öffnungen in der vorgängig beschriebenen Art versehen werden muss, damit diese bzw. dieses positionsgenau am Spannhalter festgespannt werden kann. Insbesondere die Zentrierelemente der Palette bzw. des Werkstücks, welche aus den beiden vorgängig beschriebenen Zentrieröffnungen 33, 34 bestehen, sind schnell einfach und kostengünstig anzubringen.

### Bezugszeichenliste : Ref-Tool-Holder

- 1.: Spannhalter
- 2.: Palette
- 3.: Kupplungsseite
- 4.: Einzugsbolzen
- 5.: Einzugsbolzen
- 6.: Durchgangsbohrung
- 7.: Durchgangsbohrung
- 8.: Druckfläche
- 9.: Druckfläche
- 10.: Orientierungsfläche (Einzugsbolzen)
- 11.: Orientierungsfläche (Einzugsbolzen)
- 12.: Druckfeder
- 13.: Druckfeder
- 14.: Aufnahme
- 15.: Aufnahme
- 16.: Schlitz
- 17.: Schlitz
- 18.: Inbusschraube
- 19.: Inbusschraube
- 20.: Zentrierstift
- 21.: Zentrierstift
- 22.: Auflagefläche (Z-Auflage)
- 23.:
- 24.: Adapterplatte
- 25.: Spannzapfen
- 26.: Stützfüsse
- 27.:
- 28.: Fixieröffnung
- 29.: Fixieröffnung
- 30.: Spannfläche
- 31.: Spannfläche
- 32.:
- 33.: Zentrieröffnung
- 34.: Zentrieröffnung
- 35.: V-förmige Seitenfläche
- 36.: gerade Seitenfläche
- 37.: plane Unterseite (Palette)
- 38.: Befestigungsbohrungen
- 39.: Freistellungen
- 40.: plane Unterseite (Werkstück)
- 41.:
- 42.:
- 43.:
- 44.:
- 45.:
- 46.:
- 47.:
- 48.:
- 49.:
- 50.:
- 51.:
- 52.:
- 53.:
- 54.:
- 55.:
- 56.:
- 57.:
- 58.:
- 59.:
- 60.:
- 61.:
- 62.:
- 63.:
- 64.:
- 65.:
- 66.:
- 67.:
- 68.:
- 69.:
- 70.:

## Patentansprüche

1. Spannvorrichtung mit einem Spannhalter (1) zum positionsgenauen Festspannen einer Palette (2) oder eines Werkstücks (2a), wobei der Spannhalter (1) mit ersten Zentrierelementen (20, 21) versehen ist, welche mit an der Palette (2) oder am Werkstück (2a) korrespondierend angeordneten weiteren Zentrierelementen (33, 34) derart zusammenwirken, dass die Palette (2) oder das Werkstück (2a) beim Festspannen in X- und Y-Richtung sowie bezüglich der Winkellage um die Z-Achse ausgerichtet wird, und wobei der Spannhalter (1) mit zumindest einem Spannelement (4, 5) zum Fixieren der Palette (2) bzw. des Werkstücks (2a) am Spannhalter (2) versehen ist, und wobei die am Spannhalter (1) angeordneten ersten Zentrierelemente (20, 21) derart auf die an der Palette (2) bzw. am Werkstück (2a) angeordneten weiteren Zentrierelemente (33, 34) abgestimmt sind, dass die Palette (2) bzw. das Werkstück (2a) nach dem Aufsetzen auf den Spannhalter (1) durch Verschiebung in der X-Y-Ebene gegenüber dem Spannhalter (1) zentrierbar ist, **dadurch gekennzeichnet, dass** das jeweilige Spannelement (4, 5) mit einer abgeschrägten Druckfläche (8, 9) versehen ist und die Palette (2) bzw. das Werkstück (2a) korrespondierende Spannflächen (30, 31) aufweist, derart dass die Palette (2) bzw. das Werkstück (2a) beim Fixieren am Spannhalter (1) in der X-Y-Ebene gegen dessen Zentrierelemente (20, 21) gedrückt und gleichzeitig in Z-Richtung gegen den Spannhalter (1) gezogen wird.

2. Spannvorrichtung nach Anspruch 1, **dadurch gekennzeichnet, dass** das jeweilige Spannelement (4, 5) mit einer abgeschrägten Druckfläche (8, 9) versehen ist, welche mit der in Z-Richtung verlaufenden Längsachse (L) des Spannhalters (1) einen Winkel (α) zwischen 30°und 60°, insbesondere zwischen 40° und 50°, einschliesst.

3. Spannvorrichtung nach Anspruch 1 oder 2, **dadurch gekennzeichnet, dass** die am Spannhalter (1) angeordneten ersten Zentrierelemente (20, 21) derart auf die an der Palette (2) bzw. am Werkstück (2a) angeordneten weiteren Zentrierelemente (33, 34) abgestimmt sind, dass nach dem losen Aufsetzen der Palette (2) bzw. des Werkstücks (2a) auf den Spannhalter (1) die weiteren Zentrierelemente (33, 34) der Palette (2) bzw. des Werkstücks (2a) gegenüber den ersten Zentrierelementen (20, 21) des Spannhalters (1) in der X-Y-Ebene Spiel haben, wobei die am Spannhalter (1) angeordneten ersten Zentrierelemente (20, 21) durch Verschiebung der Palette (2) bzw. des Werkstücks (2a) in der X-Y-Ebene an den weiteren Zentrierelementen (33, 34) der Palette (2) bzw. des Werkstücks (2a) zur Anlage kommen.

4. Spannvorrichtung nach einem der vorhergehenden Ansprüche, **dadurch gekennzeichnet, dass** die am Spannhalter (1) angeordneten ersten Zentrierelemente aus zumindest zwei Zentrierstiften (20, 21) bestehen, während die weiteren Zentrierelemente zumindest zwei Öffnungen (28, 29) umfassen, wovon die eine Öffnung (33) mit zwei versetzten Anschlagflächen (35a, 35b) zum Ausrichten der Palette (2) bzw. des Werkstücks (2a) in der X- und Y-Richtung versehen ist, während die andere Öffnung (34) mit zumindest einer Anschlagfläche (36) zum Ausrichten der Palette (2) bzw. des Werkstücks (2a) bezüglich der Winkellage um die Z-Achse versehen ist.

5. Spannvorrichtung nach Anspruch 4, **dadurch gekennzeichnet, dass** der Spannhalter (1) mit zwei Zentrierstiften (20, 21) und die Palette (2) bzw. das Werkstück (2a) mit zwei korrespondierenden Zentrieröffnungen (33, 34) versehen ist, und dass der Spannhalter (1) mit zwei Spannelementen (4, 5) versehen ist, welche beim Festspannen auf die Palette (2) bzw. das Werkstück (2a) eine in Richtung des jeweiligen Zentrierstifts (20, 21) wirkende Kraft ausüben.

6. Spannvorrichtung nach einem der vorhergehenden Ansprüche, **dadurch gekennzeichnet, dass** die Palette (2) bzw. das Werkstück (2a) mit einer planen Unterseite (37, 40) und der Spannhalter (1) mit zumindest drei Auflageflächen (22a, 22b, 22c, 22d) versehen ist, an welchen die plane Unterseite (37, 40) der Palette (2) bzw. des Werkstücks (2a) beim Festspannen zur Anlage kommt.

7. Spannvorrichtung nach einem der vorhergehenden Ansprüche, **dadurch gekennzeichnet, dass** die Palette (2) bzw. das Werkstück (2a) mit zwei Fixieröffnungen (28, 29) versehen ist, in welche sich das jeweilige Spannelement (20, 21) erstrecken kann, wobei die jeweilige Fixieröffnung (28, 29) mit der schrägen Spannfläche (30, 31) versehen ist, an welcher die Druckfläche (8, 9) des zugeordneten Spannelements (4, 5) beim Festspannen anzugreifen bestimmt ist.

8. Spannvorrichtung nach Anspruch 5, **dadurch gekennzeichnet, dass** die eine Zentrieröffnung (33) der Palette (2) bzw. des Werkstücks (2a) mit einem V-förmig zulaufenden Zentrierbereich (35) versehen ist, an welchem sich der zugeordnete Zentrierstift (20) des Spannhalters (1), zum Ausrichten der Palette (2) bzw. des Werkstücks (2a) in X- und Y-Richtung, anlegt.
